# EUROPEAN PATENT APPLICATION

(11) **EP 3 686 644 A1**
(43) Date of publication of application: **29.07.2020**
(21) Application number: 19153650.7
(22) Date of filing: 25.01.2019
(51) Int. Cl.: G02B 21/00, G01N 21/64

(54) **TWO-COLOR CONFOCAL COLOCALIZATION MICROSCOPY**

(71) Applicant: Hochschule für angewandte Wissenschaften München, 80335 München (DE)
(72) Inventor: Polzer, Christoph, 82008 Unterhaching (DE); Hellerer, Thomas, 81377 München (DE)
(74) Representative: Lucke, Andreas

(57) **Abstract**

Disclosed herein is a method for two-color confocal colocalization microscopy of a sample. The method comprises generating a first confocal excitation pulse with a first wavelength λ₁ and a second confocal excitation pulse with a second wavelength λ₂ different from the first wavelength; focusing the first and second confocal excitation pulses onto a confocal focus point; generating a stimulated emission depletion (STED) excitation pulse with the first wavelength and a STED depletion pulse with the second wavelength; and focusing the STED excitation pulse and the STED depletion pulse onto a STED focus point. An n-photon excitation at the first wavelength with *n* ≥ 1 is resonant with an excitation transition of a STED imaging marker; the second wavelength is resonant with a depletion transition of the STED imaging marker; and a two-photon excitation involving a photon having the first wavelength and a photon having the second wavelength is resonant with an excitation transition of a confocal imaging marker.

## Description

### FIELD OF THE INVENTION

The present invention is in the field of physics and biology. In particular, the invention relates to a method and a device for two-color confocal colocalization microscopy of a sample.

### BACKGROUND

Optical microscopy is a versatile tool to determine the spatial structure of a sample on a microscopic scale, in particular for biological samples like cells. Labeling specific constituents of the sample, e.g. certain proteins or other biomolecules, with imaging markers like fluorescent molecules may additionally provide insight into the function of the sample. Different constituents of the sample may be distinguished by using two types of imaging markers that absorb and/or emit light at different wavelengths such that the different constituents can be imaged independently. The relative positions of the different constituents may be determined by colocalization microscopy, wherein separate images are taken at the two wavelengths and overlapped subsequently.

Achieving a precise overlapping may be challenging, for example due to chromatic aberrations. This applies in particular to confocal imaging techniques, which rely on the scanning of a focused light beam across the sample and require an accurate alignment of the light beam to enable the correct reconstruction of an image from a plurality of measurements at different focus points. To facilitate the alignment, a reference marker may be used that can be imaged at both wavelengths, e.g. on an alignment target or by inserting the reference marker into the sample. Alternatively, two-photon processes may be used to excite the imaging markers, wherein light of the same wavelength is involved in the excitation for both types of imaging markers, see P. Mahou et al., Nature Methods 9, 815 (2012*).*

The spatial resolution of conventional confocal microscopes is determined by the focus size of the light beam and may thus be limited by the diffraction limit. A resolution below the diffraction limit may be achieved with super-resolution techniques like stimulated emission depletion (STED) microscopy, see e.g. S.W. Hell, Science 316, 1153 (2007*).* STED relies on the local suppression of spontaneous fluorescence of an imaging marker by rapid depletion of excited states through stimulated emission. For this, an excitation laser beam is overlapped with a depletion beam, which can transfer imaging markers from an excited state to the ground state by stimulated emission. The intensity distribution of the depletion beam is modified such that imaging markers outside of a small imaging region can be effectively switched off by the depletion beam. A STED microscope may be implemented with pulsed lasers, see e.g. T.A. Klar et al., Proc. Natl. Acad. Sci. U.SA. 97, 8206 (2000*),* and may be combined with two-photon excitation schemes, see G. Moneron and S.W. Hell, Optics Express 17, 14567 (2009*)* and P. Bianchini et al., Proc. Natl. Acad. Sci. U.SA. 109, 6390 (2012*).*

This may for example enable colocalization microscopy with improved resolution by combining STED imaging of a first type of imaging marker with conventional confocal imaging of a second type of imaging marker. The use of STED, however, may complicate the overlapping of images further due to the depletion beam that is required in addition.

### SUMMARY OF THE INVENTION

The object of the invention is thus to provide a method and a device that simplify the alignment and image reconstruction for two-color confocal colocalization microscopy of a sample and improve the imaging resolution.

This object is met by a method and a device according to Claim 1 and 9, respectively. Embodiments of the present invention are detailed in the dependent claims.

The inventive method for two-color confocal colocalization microscopy of a sample comprises the following steps: (1) generating a first confocal excitation pulse with a first wavelength λ₁ and a second confocal excitation pulse with a second wavelength λ₂ different from the first wavelength; (2) focusing the first and second confocal excitation pulses onto a confocal focus point; (3) generating a stimulated emission depletion (STED) excitation pulse with the first wavelength and a STED depletion pulse with the second wavelength; and (4) focusing the STED excitation pulse and the STED depletion pulse onto a STED focus point. An n-photon excitation at the first wavelength with *n* ≥ 1 is resonant with an excitation transition of a STED imaging marker and the second wavelength is resonant with a depletion transition of the STED imaging marker. Furthermore, a two-photon excitation involving a photon having the first wavelength and a photon having the second wavelength is resonant with an excitation transition of a confocal imaging marker. The numbering of the steps above is for clarity only and does not indicate a certain order of execution. As far as technically feasible, the steps can be permuted and the method and any embodiment thereof can be performed in an arbitrary order of these steps. In particular, steps may be performed simultaneously at least in part.

The pulses may be generated from one or more light sources, preferably coherent light sources like lasers. In one example, the first confocal excitation pulse and the STED excitation pulse may be generated from a first light source and the second confocal excitation pulse and the STED depletion pulse may be generated from a second light source. Each pulse may for example be generated from a pulsed laser source, e.g. a picosecond or femtosecond laser source, or from a continuous-wave laser source, e.g. by modulating an output of the continuous-wave laser source with an acousto-optic modulator, an electro-optic modulator, a mechanical shutter or a combination thereof. Each pulse may for example have a pulse duration in the range between 10 fs and 10 ns, wherein the pulse duration may be different for each pulse. The pulse duration of a pulse is defined as the time during which the spatially averaged intensity of the pulse, i.e. the intensity averaged over a plane perpendicular to the propagation direction of the pulse, is equal to or larger than 1/e² of a global maximum of the spatially averaged intensity of the pulse. The pulse durations may e.g. be chosen based on properties of the imaging markers used for labeling the sample, e.g. adapted to an absorption cross-section, a lifetime of an excited state and/or a time scale of vibrational relaxations. The first confocal excitation pulse and the STED excitation pulse have a center wavelength corresponding to the first wavelength λ₁. The second confocal excitation pulse and the STED depletion pulse have a center wavelength corresponding to the second wavelength λ₂, which is different from the first wavelength. The first and second wavelengths may for example be between 400 nm and 2200 nm. A spectral width of the pulses may be Fourier-limited by the respective pulse duration or may be larger than the Fourier limit.

The first and second confocal excitation pulses are focused onto a common focus point, also denoted as the confocal focus point, e.g. by an objective through which the pulses pass. Similarly, the STED excitation and depletion pulses are focused onto a common focus point, also denoted as the STED focus point. A focus point of a pulse is defined as the point at which the extent of an intensity distribution of the pulse in a plane perpendicular to its propagation direction has a local minimum, wherein the extent may e.g. be quantified by the second moment of the intensity distribution in the respective plane. The position of the confocal focus point and the STED focus point maybe equal or maybe different. Preferably, the pulses are focused tightly such that a waist of the corresponding intensity distribution at the respective focus point is smaller than the wavelength λ₁ and λ₂, respectively. The waist of an intensity distribution is defined as the azimuthally averaged largest radial distance at which the intensity is 1/e² of a global maximum of the intensity distribution, wherein the radial direction is perpendicular to the propagation direction of the respective pulse.

The sample may comprise two types of imaging markers, a confocal imaging marker and a STED imaging marker. The imaging markers may e.g. be fluorophores like fluorescent proteins or nitrogen-vacancy centers and may have a plurality of internal states, e.g. an electronic ground state manifold and an excited electronic state manifold. The confocal imaging marker and STED imaging marker have different energy spectra and correspondingly exhibit different optical properties.

The first wavelength is chosen such that an *n*-photon excitation at the first wavelength with *n* ≥ 1 is resonant with an excitation transition of the STED imaging marker. The excitation transition of the STED imaging marker is an optically excitable transition between two internal states of the STED imaging marker, e.g. a transition between a state in the electronic ground state manifold and a state in the excited electronic state manifold of the STED imaging marker. Correspondingly, the STED excitation pulse may excite STED imaging markers in the sample through simultaneous absorption of *n* photons. Preferably, the excitation transition connects a vibrational ground state of the electronic ground state manifold and an excited vibrational state of the excited electronic state manifold.

The second wavelength is chosen to be resonant with a depletion transition of the STED imaging marker. The depletion transition of the STED imaging marker is an optically excitable transition between two internal states of the STED imaging marker, e.g. a transition between a state in the excited electronic state manifold and a state in the electronic ground state manifold of the STED imaging marker. Correspondingly, the STED depletion pulse may de-excite excited STED imaging markers in the sample through stimulated emission. Thereby, STED microscopy may be performed, wherein STED imaging markers in the vicinity of the STED focus point are excited through the STED excitation pulse and excited STED imaging markers outside of a small imaging region are subsequently transferred to the ground state by the STED depletion pulse. Hence, a fluorescence signal due to spontaneous emission of excited STED imaging markers may predominantly originate from the imaging region. Preferably, the depletion transition connects a vibrational ground state of the excited electronic state manifold to an excited vibrational state of the electronic ground state manifold.

The confocal imaging marker, the STED imaging marker, the first wavelength and/or the second wavelength are chosen such that a two-photon excitation involving a photon having the first wavelength and a photon having the second wavelength is resonant with an excitation transition of the confocal imaging marker. The excitation transition of the confocal imaging marker is an optically excitable transition between two internal states of the confocal imaging marker, e.g. a transition between a state in the electronic ground state manifold and a state in the excited electronic state manifold of the confocal imaging marker. Correspondingly, confocal imaging markers in the sample may be excited through combined absorption of photons from the first and second confocal excitation pulses. Preferably, the excitation transition connects a vibrational ground state of the electronic ground state manifold and an excited vibrational state of the excited electronic state manifold.

With this combination of wavelengths, the method may be used to perform two-color confocal colocalization microscopy of the sample, e.g. with STED imaging of the STED imaging markers and conventional confocal imaging of confocal imaging markers, in such a way that light of each wavelength is involved in the imaging of both the STED imaging markers and the confocal imaging markers. This may improve the overlapping of images by reducing the impact of chromatic aberrations and improper alignment of the optical paths for pulses at different wavelengths. When performing confocal colocalization microscopy using different wavelengths for imaging different types of imaging markers, the positions of the respective focus points may be different, e.g. due to chromatic aberrations or improper alignment, and correspondingly may not been known precisely. This may complicate the reconstruction of images as well as the overlapping of images obtained by STED imaging and confocal imaging. With the method described above, the same light sources and the same wavelengths may be used for imaging the confocal imaging markers and the STED imaging markers. This may enable a precise positioning of the respective focus points and may thus simplify the reconstruction and overlapping of the corresponding images. Furthermore, the microscope setup and alignment thereof may be simplified since only two wavelengths are used to address the three transitions involved in the imaging.

The first confocal excitation pulse and the STED excitation pulse may propagate along a first optical path, e.g. by generating both pulses from the same light source or by generating the pulses from different light sources and spatially overlapping the pulses subsequently. Accordingly, the second confocal excitation pulse and the STED depletion pulse may propagate along a second optical path. The first and second optical paths may be spatially overlapped by an optical element such that collimated light propagating along both paths is focused onto the same focus point. This may for example be achieved by overlapping the first and second optical paths on the same optical path, also referred to as the main optical path, e.g. using a dichroic mirror or a beam splitter. In other examples, the first and second optical paths may be spatially overlapped only at the focus point, i.e. the first and second optical paths may intersect under an angle at the focus point. In this case, an adjustable optical element like an adjustably mounted mirror may be used for overlapping the two optical paths.

In a preferred embodiment, the method further comprises imprinting a phase pattern and/or an intensity pattern onto the STED depletion pulse. The phase pattern and/or intensity pattern may be chosen such that an intensity distribution of the STED depletion pulse in a STED focal plane exhibits a local minimum at the STED focus point, the STED focal plane being the plane perpendicular to the propagation direction of the STED depletion pulse that contains the STED focus point. Imprinting a phase pattern refers to locally modifying the phase of the electric field of the STED depletion pulse by a phase shift ϕ(x,y), wherein the phase shift ϕ at a given position (x,y) perpendicular to the propagation direction of the STED depletion pulse is determined by the phase pattern. Correspondingly, imprinting an intensity pattern refers to locally modifying the intensity of the STED depletion pulse by a scaling factor α(x,y), wherein the scaling factor α at a given position (x, y) perpendicular to the propagation direction of the STED depletion pulse is determined by the intensity pattern. In one example, the STED depletion pulse may initially exhibit a homogeneous phase distribution and a Gaussian or flat-top intensity profile and a vortex-like phase pattern may be imprinted onto the STED depletion pulse. A vortex-like phase pattern is a phase pattern with a phase that increases linearly from o to 2π in the azimuthal direction. In another example, an intensity distribution with a local minimum at the center may be imprinted onto the STED depletion pulse and imaged onto the STED focus point. A phase pattern may for example be imprinted on the STED depletion pulse using a reflective or transmissive phase mask with a spatially varying optical path length, e.g. a static phase mask like a plate with a spatially varying thickness and/or a spatially varying index of refraction or an adaptive phase mask like a liquid-crystal spatial light modulator that is configured to adjust the phase pattern by adjusting a spatial distribution of the optical path length. An intensity pattern may for example be imprinted on the STED depletion pulse using an intensity modulator like a digital micromirror device, a reflective or transmissive mask with a spatially varying reflectivity or transmissivity or an electro-optic modulator with a spatially varying electric field and/or spatially varying electro-optic properties.

The method may further comprise adjusting the phase pattern to a phase distribution of the STED depletion pulse, in particular the initial phase distribution of the STED depletion pulse prior to imprinting the phase pattern, and/or adjusting the intensity pattern to an intensity distribution of the STED depletion pulse, in particular the initial intensity distribution of the STED depletion pulse prior to imprinting the intensity pattern. This may for example allow for compensating wavefront aberrations or intensity variations of the STED depletion pulse. The phase and/or intensity pattern may in particular be adjusted such that the intensity of the STED depletion pulse at the STED focus point is reduced and/or such that a width of the intensity minimum at the STED focus point is reduced. When using an adaptive phase mask like a liquid-crystal spatial modulator or an adjustable intensity modulator like a digital micromirror device, this may for example comprise optimizing individual elements, e.g. pixels, of the respective modulator using the aforementioned criteria.

In a preferred embodiment, an intensity of the STED depletion pulse at the STED focus point is less than 1%, preferably less than 0.1% of a global maximum of the intensity distribution of the STED depletion pulse in the STED focal plane. Thereby, an effective depletion of excited STED imaging markers outside a center region around the STED focus point may be achieved while reducing the depletion probability at the STED focus point, e.g. to increase a signal from the center region. The intensity of the STED depletion pulse may increase strongly when going away from the STED focus point, e.g. by a factor of more than 50, preferably more than 500, in every radial direction. A size of a region around the STED focus point in which the intensity is less than 1% of the global maximum of the intensity distribution of the STED depletion pulse may be less than 20% of the second wavelength in at least one direction, preferably in every radial direction.

The intensity distribution of the second confocal excitation pulse in a confocal focal plane, i.e. the plane perpendicular to the propagation direction of the second confocal excitations pulse that contains the confocal focus point, may exhibit a local maximum, preferably a global maximum, at the confocal focus point. This may be advantageous for increasing an excitation probability of confocal imaging markers in the vicinity of the confocal focus point. The intensity distribution of the second confocal excitation pulse in the confocal focal plane may e.g. have a Gaussian shape or be an Airy pattern. This may for example be achieved by imprinting an appropriate phase and/or intensity pattern on the second confocal excitation pulse. In one example, the imprinted phase pattern may be chosen such that the second confocal excitation pulse exhibits a spatially homogeneous phase distribution prior to focusing. In another example, the imprinted intensity pattern may be chosen such that the second confocal excitation pulse exhibits a Gaussian or flat-top spatial intensity profile prior to focusing.

A pulse duration t_{STED} of the STED depletion pulse may be larger than a pulse duration t_{conf} of the second confocal excitation pulse. In one example, t_{conf} may be between 1 ps and 100 ps and t_{STED} between 100 ps and 10 ns. Furthermore, a pulse energy of the STED depletion pulse may be larger than a pulse energy of the second confocal excitation pulse. The spatially averaged intensity of the STED depletion pulse may be equal to the spatially averaged intensity of the second confocal excitation pulse. In other examples, the spatially averaged intensity of the STED depletion pulse may be smaller than the spatially averaged intensity of the second confocal excitation pulse.

A time delay Δt_{conf} between the first and second confocal excitation pulses at the confocal focus point maybe less than 25%, preferably less than 10% of the pulse duration of the first and/or second confocal excitation pulse. The time delay between two pulses is defined as the difference in arrival time between corresponding points of the two pulses, e.g. the point in time at which the spatially averaged intensity of the pulse is maximum or the first or last point in time at which the spatially averaged intensity of the pulse is a certain fraction of the maximum spatially averaged intensity. In one example, the time delay Δt_{conf} may be less than 100 fs, the pulse duration of the first confocal excitation pulse may be between 100 fs and 10 ps and t_{conf} may be between 1 ps and 100 ps.

A time delay Δt_{STED} between the STED excitation pulse and the STED depletion pulse at the STED focus point may be equal to or larger than a pulse duration of the STED excitation pulse, e.g. such that the STED depletion pulse arrives at the STED focus point when or after the STED excitation pulse has passed the STED focus point. Preferably, the time delay At_{STED} is smaller than two times the pulse duration of the STED excitation pulse. In one example, a pulse duration of the STED excitation pulse is between 100 fs and 10 ps and At_{STED} is between 100% and 150% of the pulse duration of the STED excitation pulse.

The method may further comprise labeling a first constituent of the sample with confocal imaging markers and labeling a second constituent of the sample with STED imaging markers. In one example, the sample may be a biological sample comprising biological cells, the first constituent may be proteins of a first type, e.g. a certain protein arranged in a membrane of the cells, and the second constituent may be proteins of a second type, e.g. a certain antibody. In another example, the first constituent may be a certain part of a cell, e.g. the nucleus, and the second constituent may be a different part of the cell, e.g. the cell membrane. The labeling may e.g. be conducted by using imaging markers that are configured to specifically bind to the respective constituent, e.g. nucleic acid markers or antibody markers, or through expression of fluorescent proteins.

In one embodiment, the first wavelength may be chosen such that a two-photon excitation at the first wavelength is resonant with an excitation transition of the STED imaging marker, i.e. *n* = 2. Using a two-photon excitation may be advantageous for reducing an area in which STED imaging markers are excited by the STED excitation pulse due to the nonlinear dependence of the excitation probability on the intensity of the STED excitation pulse.

In a preferred embodiment, the method further comprises detecting light emitted from the sample at an emission wavelength λ_{b} of the STED imaging marker and/or an emission wavelength λₐ of the confocal imaging marker. This may in particular comprise determining an intensity of light emitted from the sample at the respective emission wavelength, e.g. with a photodiode. The emission wavelength of an imaging marker is the wavelength of a photon emitted when the imaging marker undergoes a relaxation transition by spontaneous emission, wherein the relaxation transition of the imaging marker is an optically excitable transition between two internal states of the imaging marker, e.g. a transition between a state in the excited electronic state manifold and a state in the electronic ground state manifold of the imaging marker. If an imaging marker can undergo a plurality of relaxation transitions, e.g. between states of the excited electronic state manifold and of the electronic ground state manifold, the emission wavelength is the wavelength corresponding to the peak of the respective emission spectrum and the detection may be performed for a range of wavelengths around the emission wavelength. In one example, light within a range of 5 nm to 50 nm around the emission wavelength of the STED imaging marker and/or of the confocal imaging marker may be detected. Preferably, the light emitted from the sample is spectrally filtered prior to detection, e.g. to filter out light at the first and/or second wavelength. The detection may in particular be performed in response to the first and second confocal excitations pulses and/or the STED excitation and depletion pulses, e.g. for a predefined time interval after generating the respective pulses. In one example, an integrated intensity of light emitted by the sample may be determined over a period of 1 ns to 100 µs after generating the respective pulses.

The method may further comprise scanning the confocal focus point across the sample to acquire a confocal image characterizing a spatial distribution of confocal imaging markers and scanning the STED focus point across the sample to acquire a STED image characterizing a spatial distribution of STED imaging markers. The scanning may for example be performed by changing the position of the confocal focus point and/or of the STED focus point. Additionally or alternatively, a position of the sample may be changed relative to the confocal focus point and/or the STED focus point. The confocal focus point and/or the STED focus point may for example be scanned on a grid, e.g. a rectangular grid, across a predefined one-dimensional or two-dimensional region of interest on the sample. Preferably, a pair of confocal excitation pulses and/or of STED pulses is generated and focused onto each point of the grid. The intensity emitted from the sample may be measured in response to each pair of pulses, wherein the intensity may depend on the density of confocal and STED imaging markers, respectively, in the vicinity of the focus point. The measured intensity may be associated with the position of the focus point on the sample to form the confocal and STED image, respectively, e.g. such that the image contains the measured intensity as a function of the focus position.

In a preferred embodiment, the method comprises combining the confocal image and the STED image to form a colocalization image, wherein the colocalization image comprises information on the spatial distributions of confocal imaging markers and STED imaging markers. In one example, the confocal and STED focus point may be scanned across the same grid and the colocalization image may contain the measured intensity in response to the confocal pulses and the measured intensity in response to the STED pulses for each position of the focus point on the sample. In other examples, different grids and/or regions of interest may be used for the confocal and STED pulses, e.g. a smaller region of interest and a grid with a finer spacing for the STED pulses and a larger region of interest and a grid with a coarser spacing for the confocal pulses.

The invention also provides a device for two-color confocal colocalization microscopy of a sample. The device comprises a first light source configured to generate the first confocal excitation pulse and the stimulated emission depletion (STED) excitation pulse with the first wavelength λ₁. The device further comprises a second light source configured to generate the second confocal excitation pulse and the STED depletion pulse with the second wavelength λ₂ different from the first wavelength. Preferably, both light sources are coherent light sources like lasers. Each of the light sources may for example be a pulsed laser source, e.g. a picosecond or femtosecond laser source. The light sources may for example be mode-locked, q-switched or gain-switched laser sources. Alternatively, each of the light sources may comprise a continuous-wave laser source and a pulse shaping unit that is configured to modulate a laser beam emitted by the continuous-wave laser source to generate the respective pulses. The pulse shaping unit may e.g. comprise a mechanical shutter, an acousto-optic modulator, an electro-optic modulator or a combination thereof. Each of the light sources may be configured to adjust a pulse duration, a pulse energy and/or an emission time of the respective pulses. Each of the light sources may further be configured to receive a trigger signal, e.g. an electric trigger signal, and to generate a pulse in response to the trigger signal.

The device also comprises a beam shaper configured to selectively imprint a confocal phase pattern and/or a confocal intensity pattern onto the second confocal excitation pulse and a STED phase pattern and/or STED intensity pattern onto the STED depletion pulse. The beam shaper is in particular configured to imprint the respective patterns such that an intensity distribution of the second confocal excitation pulse, when focused onto a focus point, exhibits a local maximum at the focus point and an intensity distribution of the STED depletion pulse, when focused onto a focus point, exhibits a local minimum at the focus point. In one example, the beam shaper may be configured to switch between a confocal configuration and a STED configuration upon receiving a trigger signal. Preferably, the beam shaper is an adaptive beam shaper configured to adjust the confocal phase pattern, the confocal intensity pattern, the STED phase pattern and/or the STED intensity pattern.

The beam shaper may comprise a reflective or transmissive phase mask with a spatially varying optical path length configured to imprint a phase pattern, e.g. a static phase mask like a plate with a spatially varying thickness and/or a spatially varying index of refraction. The beam shaper may be configured to move the phase mask into and out of an optical path of the second confocal excitation pulse and the STED depletion pulse, e.g. to imprint the STED phase pattern with the phase mask in the optical path and to imprint the confocal phase pattern with the phase mask removed from the optical path. Preferably, the beam shaper comprises an adaptive phase mask, e.g. a reflective or transmissive liquid-crystal spatial light modulator, that is configured to adjust the phase pattern by adjusting a spatial distribution of the optical path length. The adaptive phase mask may be placed in the optical path of the second confocal excitation pulse and the STED depletion pulse. The beam shaper may be configured to dynamically adjust the adaptive phase mask, e.g. when receiving a phase pattern to be imprinted or upon receiving a trigger signal to switch between two or more predefined phase patterns.

Alternatively or additionally, the beam shaper may comprise an intensity modulator configured to imprint an intensity pattern, for example an adjustable intensity modulator like a digital micromirror device configured to adjust the imprinted intensity pattern. In another example, the intensity modulator may comprise a polarizer and an electro-optic modulator with a spatially varying electric field and/or spatially varying electro-optic properties or an attenuation mask with a spatially varying transmissivity or reflectivity.

In a preferred embodiment, the intensity of the STED depletion pulse at the focus point is less than 1%, preferably less than 0.1% of the global maximum of the intensity distribution of the STED depletion pulse in the focal plane. The intensity of the STED depletion pulse may increase strongly when going away from the STED focus point, e.g. by a factor of more than 50, preferably more than 500, in every radial direction. The size of a region around the STED focus point in which the intensity is less than 1% of the global maximum of the intensity distribution of the STED depletion pulse may be less than 20% of the second wavelength in at least one direction, preferably in every radial direction.

The first and/or second light source may be configured to adjust the first and second wavelength, respectively. In one example, the first light source is a Ti:Sapphire laser, which may be configured to tune the first wavelength by 100 nm to 400 nm, e.g. between 700 and 900 nm. The second light source may for example be a tunable diode laser, which may e.g. configured to tune the first and second wavelength by 10 nm to 100 nm, e.g. between 660 nm and 680 nm.

In a preferred embodiment, the second light source is configured to adjust a pulse duration t_{conf} of the second confocal excitation pulse and/or a pulse duration t_{STED} of the STED depletion pulse. The second light source may for example be a gain-switched diode laser configured to adjust an injection current for a laser diode to generate pulses. Alternatively, the second light source may be a Q-switched laser with a resonator with a variable quality factor, e.g. through an adjustable attenuator. In one example, the second light source may be configured to adjust the pulse durations t_{conf} and t_{STED} between 10 ps and 1 ns.

The device may comprise a time delay unit that is configured to adjust the time delay Δt_{conf} between the first and second confocal excitation pulses and/or the time delay Δt_{STED} between the STED excitation and depletion pulses. The time delay unit may be implemented in hardware, software or a combination thereof. In one example, the time delay unit may be an electronic circuit configured to generate two electric trigger signals separated by a variable time delay and to send the trigger signals to the first and second light source, respectively. Alternatively, the time delay unit may be an electronic circuit configured to receive a first trigger signal, e.g. from the first light source, and to generate a delayed trigger signal by delaying the first trigger signal by a variable time delay, e.g. to be sent to the second light source. The time delay unit may be configured to receive an analog or digital signal or a user input by software to set the time delay Δt_{conf} and/or the time delay Δt_{STED}.

The device may also comprise an objective to focus laser pulses emitted by the first and/or second light source. Preferably, the objective is a high-NA objective with a numerical aperture larger than 0.5, in particular an immersion objective. An optical axis of the objective may for example be aligned with the main optical path. In some examples, the device may comprise a second objective, e.g. for collecting light emitted by the sample for detection.

In a preferred embodiment, the device comprises a beam scanner configured to adjust a propagation direction of pulses emitted by the first and/or second light source, e.g. to scan the confocal and/or STED focus point across the sample. The beam scanner may for example be configured to adjust an angle of the main optical path and/or a transverse displacement of the main optical path with respect to the optical axis of the objective. Preferably, the beam scanner is configured to move the focus points along two axes. The beam scanner may for example comprise a movable mirror, e.g. a mirror mounted on a galvanometer scanner or piezo-actuated mount or a digital micromirror device. In other examples, the beam scanner may comprise an acousto-optic deflector and/or an electro-optic modulator. Alternatively or additionally, the device may comprise a sample scanner configured to adjust a position of the sample, e.g. a one-axis, two-axis or three-axis translation stage.

The device may further comprise a photodetector to detect light emitted from the sample at an emission wavelength, e.g. a point-like detector such as a photodiode or an extended detector like a CCD or CMOS camera. The photodetector may in particular be configured to measure an intensity of the incident light and to generate an imaging signal characterizing the measured intensity, e.g. a digital signal or an analog signal like a voltage or current. The device may also comprise a filtering element configured to spectrally filter the light reaching the photodetector. The filtering element may for example be configured to reflect or absorb light at the first and/or second wavelength.

In a preferred embodiment, the device comprises an imaging analysis unit, wherein the imaging analysis unit is configured to obtain an imaging signal from the photodetector. The imaging analysis unit may in particular be configured to obtain a confocal imaging signal, wherein the confocal imaging signal is associated with a confocal focus point, and a STED imaging signal, wherein the STED imaging signal is associated with a STED focus point. The confocal imaging signal may for example be the intensity measured by the photodetector in response to the confocal pulses, e.g. within a time interval between 1 ns and 100 µs after generating the confocal pulses. Accordingly, the STED imaging signal may for example be the intensity measured by the photodetector in response to the STED pulses, e.g. within a time interval between 1 ns and 100 µs after generating the STED pulses. The imaging analysis unit may be implemented in hardware, software or a combination thereof.

The imaging analysis unit may be configured to obtain a position of the confocal and/or STED focus point on the sample, e.g. from the beam scanner and/or the sample scanner, and to associate the position with the respective imaging signal, e.g. to generate a confocal and STED image, respectively, from a plurality of measurements when scanning the focus points. The imaging analysis may further be configured to combine the confocal imaging signal and the STED imaging signal to form a colocalization image, wherein the colocalization image comprises information on the confocal imaging signal, the confocal focus point, the STED imaging signal and the STED focus point. The colocalization image may for example comprise the confocal imaging signal together with the position of the confocal focus point on the sample and the STED imaging signal together with the position of the STED focus point on the sample, in particular for a plurality of measurements.

The device may also comprise a controller configured to set the time delay Δt_{conf}, the time delay Δt_{STED}, the pulse duration t_{conf}, the pulse duration t_{STED}, the confocal phase pattern, the confocal intensity pattern, the STED phase pattern and/or the STED intensity pattern. In one example, the controller may be connected to the time delay unit and may be configured to adjust a parameter of the time delay unit to set the time delay Δt_{conf} and/or the time delay Δt_{STED}. In another example, the controller may be connected to the second light source and may be configured to adjust a parameter of the second light source to set the pulse duration t_{conf}, the pulse duration t_{STED} and/or a pulse energy of the second confocal excitation pulse and/or the STED depletion pulse. In yet another example, the controller may be connected to the beam shaper and may be configured to transmit an intensity and/or phase pattern to the beam shaper. The controller may further be configured to generate trigger signals, e.g. for the first light source to generate the first confocal excitation pulse and/or the STED excitation pulse, for the time delay unit or for the beam shaper to switch between two intensity and/or phase patterns. The controller may also be configured to control the beam scanner and/or the sample scanner, e.g. to set a position of the confocal and/or STED focus point on the sample. The controller may be implemented in hardware, software or a combination thereof. In some examples, the controller and the imaging analysis unit may be a single unit providing both functionalities.

### LIST OF FIGURES

In the following, a detailed description of the invention and exemplary embodiments thereof is given with reference to the figures. The figures show schematic illustrations of
Fig. 1: a device for two-color confocal colocalization microscopy according to an exemplary embodiment of the invention;
Fig. 2a: a pulse sequence comprising a first and a second confocal excitation pulse in accordance with an embodiment of the invention;
Fig. 2b: a pulse sequence comprising a stimulated emission depletion (STED) excitation pulse and a STED depletion pulse in accordance with an embodiment of the invention;
Fig. 3a: an intensity distribution of the second confocal excitation pulse and a confocal phase pattern according to an exemplary embodiment of the invention;
Fig. 3b: an intensity distribution of the STED depletion pulse and a STED phase pattern according to an exemplary embodiment of the invention;
Fig. 4: a method for two-color confocal colocalization microscopy in accordance with an embodiment of the invention;
Fig. 5a: an energy spectrum of a confocal imaging marker according to an exemplary embodiment of the invention; and
Fig. 5b: an energy spectrum of a STED imaging marker according to an exemplary embodiment of the invention.

### DESCRIPTION OF THE PREFERRED EMBODIMENTS

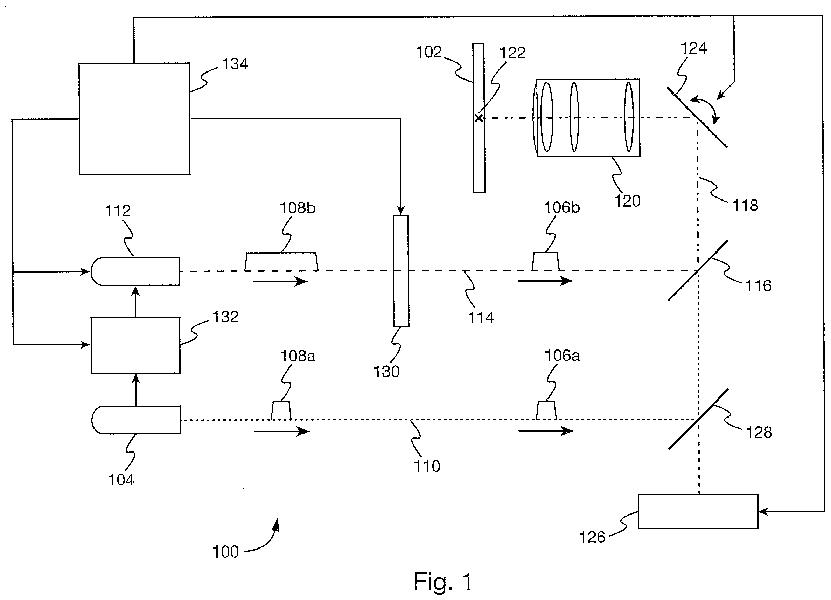

Fig. 1 depicts a device 100 for two-color confocal colocalization microscopy of a sample 102 according to an exemplary embodiment of the invention. The sample 102 may for example be a biological sample, e.g. a sample comprising biological cells and/or biomolecules like proteins or DNA, and may be mounted on a sample holder like a microscope slide or a lab-on-a-chip system.

The device 100 comprises a first light source 104 that is configured to generate a first confocal excitation pulse 106a and a stimulated emission depletion (STED) excitation pulse 108a. The first light source 104 may for example be a pulsed laser source, e.g. a picosecond or femtosecond laser source. In other examples, the first light source 104 may comprise a continuous-wave laser source and a pulse shaping unit that is configured to modulate a laser beam emitted by the continuous-wave laser source to generate the first confocal excitation pulse 106a and the STED excitation pulse 108a. The pulse shaping unit may e.g. comprise a mechanical shutter, an acousto-optic modulator, an electro-optic modulator or a combination thereof. The first light source 104 may in particular be configured to generate a plurality of laser pulses, e.g. a sequence of first confocal excitation pulse pulses and/or STED excitation pulses. The pulses 106a and 108a have a center wavelength λ₁, also referred to as the first wavelength. The first wavelength may e.g. be between 400 nm and 2200 nm. In some examples, the wavelength of the first light source 104 may be tunable, e.g. to adapt the first wavelength to an excitation spectrum of an imaging marker. The first light source 104 may for example be a Ti:Sapphire laser, a diode laser or a diode-pumped solid state laser. Pulses emitted by the first light source 104, i.e. the first confocal excitation pulse 106a and the STED excitation pulse 108a, propagate along a first optical path 110 indicated by the dotted line in Fig. 1. The pulses emitted by the first light source 104 may for example have a Gaussian or flat-top spatial intensity distribution in a plane perpendicular to the first optical path 110.

The device 100 further comprises a second light source 112 that is configured to generate a second confocal excitation pulse 106b and a STED depletion pulse 108b. The second light source 112 may for example be a pulsed laser source, e.g. a picosecond or femtosecond laser source. In other examples, the second light source 112 may comprise a continuous-wave laser source and a pulse shaping unit that is configured to modulate a laser beam emitted by the continuous-wave laser source to generate the second confocal excitation pulse 106b and the STED depletion pulse 108b. The pulse shaping unit may e.g. comprise a mechanical shutter, an acousto-optic modulator, an electro-optic modulator or a combination thereof. The second light source 112 may in particular be configured to generate a plurality of laser pulses, e.g. a sequence of second confocal excitation pulse pulses and/or STED depletion pulses. The pulses 106b and 108b have a center wavelength λ₂, also referred to as the second wavelength. The second wavelength is different from the first wavelength and may e.g. also be between 400 nm and 2200 nm. In some examples, the wavelength of the second light source 112 may be tunable, e.g. to adapt the second wavelength to an excitation and/or emission spectrum of an imaging marker. The second light source 112 may for example be a Ti:Sapphire laser, a diode laser or a diode-pumped solid state laser. Pulses emitted by the second light source 112, i.e. the second confocal excitation pulse 106b and the STED depletion pulse 108b, propagate along a second optical path 114 indicated by the dashed line in Fig. 1.

The second light source 112 may be configured to adjust a pulse duration, a pulse energy and/or an emission time of the second confocal excitation pulse 106b and/or the STED depletion pulse 108b. The second light source 112 may e.g. be configured to emit the second confocal excitation pulse 106b and/or the STED depletion pulse 108b upon receiving a trigger signal, e.g. an electric trigger signal. The second light source 112 may for example be a gain-switched diode laser configured to adjust an injection current for a laser diode to generate pulses. Alternatively, the second light source 112 may be a Q-switched laser with a resonator with a variable quality factor, e.g. through an adjustable attenuator.

The device 100 further comprises an overlapping element 116 to spatially overlap the first 110 and second optical paths 114 on a main optical path 118, which is illustrated by the dashed-dotted line in Fig. 1. The overlapping element 116 may for example be a dichroic mirror, e.g. a dichroic mirror configured to transmit light at the first wavelength and reflect light at the second wavelength. Alternatively, the overlapping element 116 may be a beam splitter, in particular a polarizing beam splitter. The pulses 106a and 108a may have a polarization that is different from a polarization of the pulses 106b and 108b, e.g. an orthogonal linear polarization or an opposite circular polarization. Preferably, a spatial orientation of the overlapping element 116 is adjustable, e.g. to align the first 110 and second optical paths 114 with respect to each other. The overlapping element 116 may for example be mounted in a manually or automatically adjustable mount.

The device 100 also comprises an objective 120 configured to focus incoming light propagating along the main optical path 118 onto a focus point 122, in particular the pulses 106a, 106b, 108a, and 108b. The objective 120 maybe a high-NA objective, e.g. an objective with a numerical aperture larger than 0.5. In some examples, the objective 120 may be an immersion objective, e.g. an oil-immersion objective with a numerical aperture above 1.0. The objective maybe mounted movably, e.g. to adjust a position of the focus point 122.

The position of the focus point 122 may further depend on a propagation direction and a divergence of the incoming light and may be different for each of the pulses 106a, 106b, 108a, and 108b. By proper alignment of the optical paths 110 and 114 onto the main optical path 118, e.g. with the overlapping element 116, pulses propagating along the optical paths 110 and 114 may be focused onto the same focus point 122. To adjust the position of the focus point 122, the device 100 comprises a beam scanner 124 that is configured to adjust a propagation direction of light propagating along the main optical path 118. Correspondingly, the position of the focus point 122 may be adjusted to be different for the confocal excitation pulses 106a and 106b than for the STED pulses 108a and 108b. The beam scanner 124 may for example be configured to adjust an angle of the main optical path 118 and/or a transverse displacement of the main optical path 118 with respect to an optical axis of the objective 120. Preferably, the beam scanner 124 is configured to move the focus point 122 along two axes, e.g. to scan the focus point 122 across a two-dimensional region of interest on the sample 102. The beam scanner 124 may for example comprise a movable mirror, e.g. a mirror mounted on a galvanometer scanner or piezo-actuated mount or a digital micromirror device. In other examples, the beam scanner 124 may comprise an acousto-optic deflector and/or an electro-optic modulator. Alternatively or additionally, the device 100 may comprise a sample scanner that is configured to adjust a position of the sample 102, e.g. a translation stage. In one example, the sample scanner may be configured to adjust the position of the sample 102 along the optical axis 118, e.g. to change a depth of the position of the focus point 122 within the sample 102. In another example, the sample scanner may be configured to adjust the position of the sample 102 along two or three axes. The sample scanner may e.g. comprise a piezo actuator, a stepper motor, a servo motor or a combination thereof.

To detect light that is emitted, scattered and/or transmitted by the sample 102, the device 100 comprises a photodetector 126, e.g. a point-like detector such as a photodiode or photomultiplier or an extended detector like a CCD or CMOS camera. The photodetector 126 may in particular be configured to measure an intensity of the light incident on the photodetector 126. In the example shown in Fig. 1, at least a part of the sample 102 is imaged onto the photodetector 126 through the objective 120. In other examples, an additional imaging system may be used to collect light to be imaged onto the photodetector 126, e.g. comprising a second objective oriented perpendicular or opposite to the objective 120. The device 100 further comprises a filtering element 128 to spectrally filter the light reaching the photodetector 126. The filtering element 128 may for example be a dichroic mirror or optical filter that transmits light at an emission wavelength of one or more types of imaging markers, while reflecting or blocking light at the first and/or second wavelength. In some examples, the device 100 may comprise two photodetectors with different filtering elements, e.g. one detector with a filtering element transmitting light at an emission wavelength of a first type of imaging marker and another detector with a filtering element transmitting light at an emission wavelength of a second type of imaging marker.

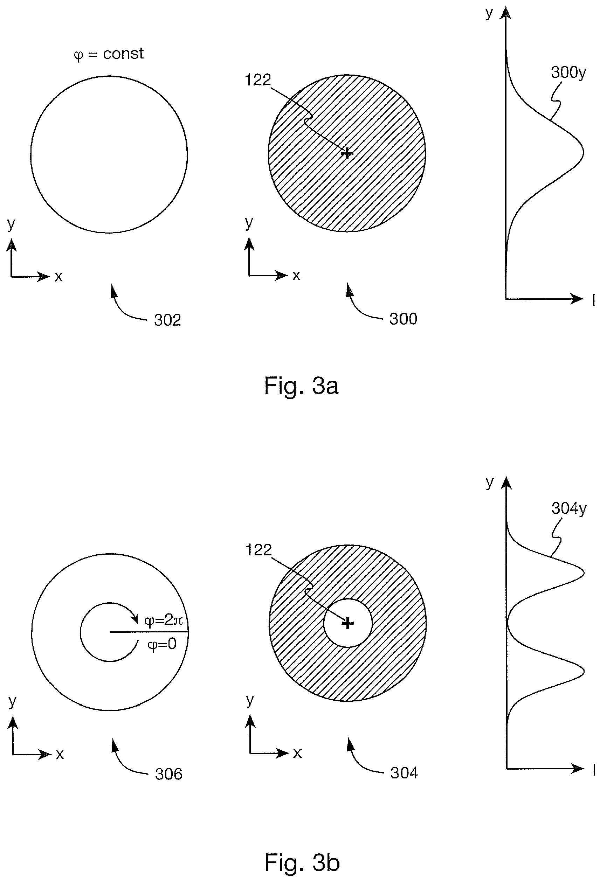

The device 100 comprises a beam shaper 130 that is configured to imprint a phase pattern and/or intensity pattern on light propagating along the second optical path 114. In particular, the beam shaper 130 is configured to imprint a confocal phase pattern and/or a confocal intensity pattern onto the second confocal excitation pulse 106b and a STED phase pattern and/or STED intensity pattern onto the STED depletion pulse 108b. The confocal phase and/or intensity pattern is chosen such that the intensity distribution of the second confocal excitation pulse 106b exhibits a local maximum at the focus point 122. The STED phase and/or intensity pattern is chosen such that the intensity distribution of the STED depletion pulse 108b exhibits a local minimum at the focus point 122. This is described in more detail below with reference to Figs. 3a and 3b.

The beam shaper 130 may for example comprise a phase mask with a spatially varying optical path length to imprint a phase pattern on light propagating along the second optical path 114, e.g. a reflective or transmissive phase mask. The optical path length is the optical path length at the second wavelength and determines the phase shift that light at the second wavelength acquires when being transmitted through or reflected off the phase mask. Preferably, the phase mask is an adaptive phase mask that is configured to adjust the phase pattern by adjusting a spatial distribution of the optical path length, e.g. a reflective or transmissive liquid-crystal spatial light modulator. The liquid-crystal spatial light modulator may for example comprise a two-dimensional pixel grid of ferroelectric or nematic liquid crystals, which may e.g. be arranged on a silicon substrate comprising a grid of electrodes to control the liquid crystals in each pixel. In another example, the beam shaper 130 may comprise a static phase mask, e.g. a glass plate with a spatially varying thickness and/or index of refraction, which may be moved into and out of the second optical path 114. The beam shaper may e.g. imprint the confocal phase pattern when the static phase mask is removed from the second optical path 114 and may imprint the STED phase pattern when the static phase mask is placed in the optical path 114.

Additionally or alternatively, the beam shaper 130 may comprise an intensity modulator to imprint an intensity pattern on light propagating along the second optical path 114 by spatially modulating the intensity of the light. Preferably, the intensity modulator is an adjustable intensity modulator configured to adjust the imprinted intensity pattern. The intensity modulator may for example be a digital micromirror device. In another example, the intensity modulator may comprise a polarizer and an electro-optic modulator with a spatially varying electric field and/or spatially varying electro-optic properties. The intensity modulator may be placed such that the intensity pattern imprinted by the intensity modulator is imaged onto the sample 102 by the objective 120.

The device 100 further comprises a time delay unit 132 that is configured to adjust a time delay At between a pulse emitted by the first light source 104 and a pulse emitted by the second light source 112. In the example shown in Fig. 1, the first light source 104 is configured to generate a trigger signal when emitting a pulse, e.g. an electric trigger signal characterizing an intensity on an internal monitor photodiode of the first light source 104 or an electric control signal used for triggering the emission of the pulse from the first light source 104. The time delay unit 132 is configured to receive the trigger signal from the first light source 104 and to generate a delayed trigger signal that is shifted relative to the trigger signal by an adjustable time delay. The second light source 112 is configured to receive the delayed trigger signal from the time delay unit 132 and to generate a pulse upon receiving the delayed trigger signal. In other examples, the time delay unit 132 may be configured to generate two trigger signals that are shifted by an adjustable time delay, wherein one signal is sent to the first light source 104 and another one to the second light source 112 to generate the respective pulse.

The device 100 also comprises a controller 134 that is coupled to the beam shaper 130, the second light source 112 and the time delay unit 132. The controller 134 may for example be configured to trigger a switching between the confocal phase and/or intensity pattern and the STED phase and/or intensity pattern by the beam shaper 130. The controller 134 may further be configured to set the confocal phase and/or intensity pattern and the STED phase and/or intensity pattern. The controller 134 may also be configured to set the time delay Δt between a pulse emitted by the first light source 104 and a pulse emitted by the second light source 112 for the time delay unit 132. Additionally or alternatively, the controller 134 may be configured to set a wavelength, a pulse duration and/or a pulse energy of the pulses emitted by the second light source 112. In some examples, the controller 134 may also be coupled to the first light source 104, e.g. to set a wavelength, an emission time, a pulse duration and/or a pulse energy of the pulses emitted by the first light source 104. Furthermore, the controller 134 may be coupled to the beam scanner 124, the sample scanner and/or the photodetector 126, e.g. to control the position of the focus point 122 on the sample 102 and to readout a signal from the photodetector 126, respectively.

The device 100 may further comprise an imaging analysis unit (not shown in Fig. 1), e.g. as part of the controller 134 or as an independent unit. The imaging analysis unit may be configured to obtain an imaging signal from the photodetector 126, wherein the imaging signal may e.g. characterize an intensity measured by the photodetector 126, for example a current or voltage of a photodiode. The imaging signal may be an analog or digital signal. The imaging analysis unit may further be configured to obtain information on the focus point 122, e.g. from the beam scanner 124 and/or the sample scanner. The information may for example comprise the position of the focus point 122 on the sample 102 at the time when the intensity was measured by the photodetector 126. The imaging analysis unit may in particular be configured to combine a plurality of imaging signals and information on the focus point 122 associated with each imaging signal to form an image, e.g. an image characterizing the imaging signal as a function of the position the focus point 122 on the sample 102.

The imaging analysis unit may also be configured to obtain information on pulses emitted by the first 104 and/or second light source 112, e.g. an emission time and a type of the pulse, i.e. whether the pulse is a confocal or STED pulse. For example, the imaging analysis unit may be configured to determine whether the imaging signal characterizes an intensity measured in response to the confocal excitation pulses 106a and 106b or the STED pulses 108a and 108b, i.e. whether the imaging signal is a confocal imaging signal or a STED imaging signal. Correspondingly, the imaging analysis unit may be configured to determine a confocal image from a plurality of confocal imaging signals and a STED image from a plurality of STED imaging signals. Furthermore, the imaging analysis unit may be configured to combine a confocal image and a STED image to form a colocalization image, e.g. an image characterizing the confocal imaging signal and the STED imaging signal as a function of the position of the focus point 122 on the sample 102.

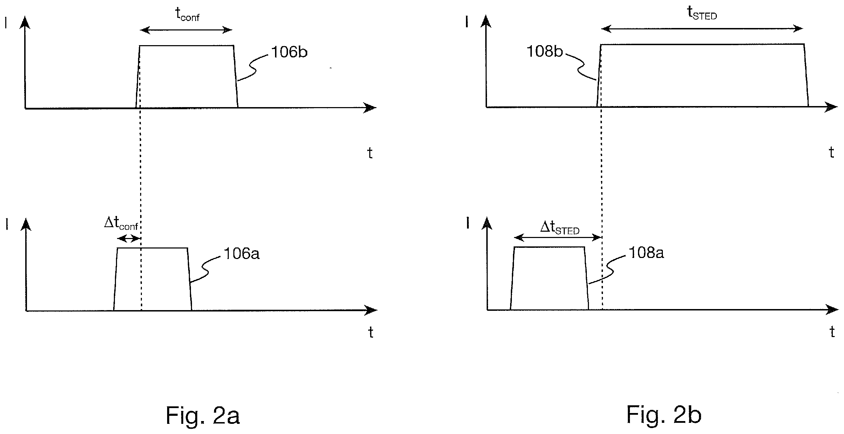

Fig. 2a schematically illustrates a spatially averaged intensity I of the first 106a and second confocal excitation pulses 106b in a focal plane containing the focus point 122 as a function of time t, wherein the focal plane is perpendicular to the main optical path 118 at the focus point 122. The arrival times of the pulses 106a and 106b at the focus point 122 are separated by a time delay Δt_{conf}, which may be adjusted via the time delay unit 132. The second confocal excitation pulse 106b has a pulse duration t_{conf}, which may be set by the controller 134. The pulse duration t_{conf} may e.g. be between 10 fs and 10 ns, in one example between 1 ps and 100 ps. The pulse duration of the first confocal excitation pulse 106a may e.g. also be between 10 fs and 10 ns, in one example between 100 fs and 10 ps. In some examples, the pulse duration of the first confocal excitation pulse 106a may be equal to t_{conf}.

Fig. 2b schematically illustrates a spatially averaged intensity I of the STED excitation pulse 108a and the STED depletion pulse 108b in the focal plane as a function of time t. The arrival times of the pulses 108a and 108b at the focus point 122 are separated by a time delay Δt_{STED}, which may be adjusted via the time delay unit 132. The STED depletion pulse 108b has a pulse duration t_{STED}, which may be set by the controller 134. The pulse duration t_{STED} may e.g. be between 10 fs and 10 ns, in one example between 100 ps and 1 ns. The pulse duration of the STED excitation pulse 108a may be equal to the pulse duration of the first confocal excitation pulse 106a and may e.g. be between 10 fs and 10 ns, in one example between 100 fs and 10 ps.

Figs. 3a and 3b depict examples for a spatial intensity distribution 300 of the second confocal excitation pulse 106b and a spatial intensity distribution 304 of the STED depletion pulse 108b in the focal plane, wherein x and y denote two axes perpendicular to the main optical path 118 at the focus point 122. The striped areas in the central plots indicate an area, in which the intensity is larger than a certain threshold intensity, e.g. larger than 1/e² of the maximum intensity of the respective intensity distribution. The plots on the right show cuts 300y and 304y of the intensity distribution 300 and 304, respectively, through the focus point 122 along the y axis.

The intensity distribution 300 of the second confocal excitation pulse 106b exhibits a maximum at the focus point 122. The intensity distribution 300 may be rotationally symmetric around the propagation direction of the second confocal excitation pulse 106b. In the example shown in Fig. 3a, the intensity distribution 300y has a Gaussian shape along the y axis. In other examples, the intensity distribution 300 may e.g. be an Airy pattern. A waist of the intensity distribution 300, i.e. the average radial distance from the focus point 122 at which the intensity has decreased to 1/e² of the peak intensity at the focus point 122, may for example be smaller than the second wavelength. The intensity distribution 300 may for example be obtained by imprinting a confocal phase pattern 302 with a spatially homogeneous phase shift ϕ = const onto the second confocal excitation pulse 106b with the beam shaper 130. The first confocal excitation pulse 106a and the STED excitation pulse 108a may have an intensity distribution in the vicinity of the focus point 122 that is similar to the intensity distribution 300, i.e. also exhibits a maximum at the focus point 122.

The intensity distribution 304 of the STED depletion pulse 108b exhibits a local minimum at the focus point 122. The intensity distribution 304 may be rotationally symmetric around the propagation direction of the STED depletion pulse 108b. In the example shown in Fig. 3b, the intensity distribution 304 has a donut-like shape with the minimum at the center surrounded by areas of high intensity in each direction perpendicular to the propagation direction of the STED depletion pulse 108b. Correspondingly, the intensity distribution 304 has a double-peak structure along the y axis at the focus point 122. The intensity distribution 304 may for example be obtained by imprinting a vortex-like STED phase pattern 306 onto the STED depletion pulse with the beam shaper 130, wherein the phase shift ϕ increases linearly from 0 to 2π in the azimuthal direction around the center and is constant in the radial direction. Alternatively, a π-step phase pattern may be used as the STED phase pattern 306 with a central circular region in which the phase shift is ϕ = π surrounded by an annular region in which the phase shift is ϕ = o.

In other examples, the intensity distribution 304 may be created by imprinting a corresponding intensity distribution onto the STED depletion pulse 108b with the beam shaper 130, e.g. using a digital micromirror device, and imaging this intensity distribution onto the focal plane. Correspondingly, to create the intensity distribution 300, the beam shaper 130 may be adjusted such that the intensity distribution of the incoming second confocal excitation pulse 106b is not modified or such that a Gaussian or flat-top intensity distribution is imprinted onto the incoming second confocal excitation pulse 106b.

Preferably, the beam shaper 130 is configured to adjust the imprinted phase and/or intensity pattern, e.g. to optimize the intensity distributions 300 and 304 by compensating spatial intensity variations and/or wavefront distortions of the respective pulses. The intensity of the STED depletion pulse 108b at the focus point 122 and/or the width of the intensity minimum at the focus point 122 may for example be minimized by adjusting the STED phase pattern 306, e.g. by locally changing the phase shift starting from a vortex-like or a π-step phase pattern. Similarly, the waist of the intensity distribution 300 of the second confocal excitation pulse 106b may e.g. be minimized by adjusting the confocal phase pattern 302. Preferably, the intensity of the STED depletion pulse 108b at the focus point 122 is less than 1%, in one example less than 0.1% of a global maximum of the intensity distribution 304. The intensity of the STED depletion pulse 108b may increase strongly when going away from the focus point 122, e.g. by a factor of more than 50, preferably more than 500, in every radial direction. A size of a region around the focus point 122 in which the intensity is less than 1% of the global maximum of the intensity distribution 304 may be less than 20% of the second wavelength in at least one direction, preferably in every radial direction. In one example, the controller 134 may be configured to automatically minimize the intensity of the STED depletion pulse 108b at the focus point 122 via the beam shaper 130, e.g. by measuring the intensity distribution 304 with the photodetector 126.

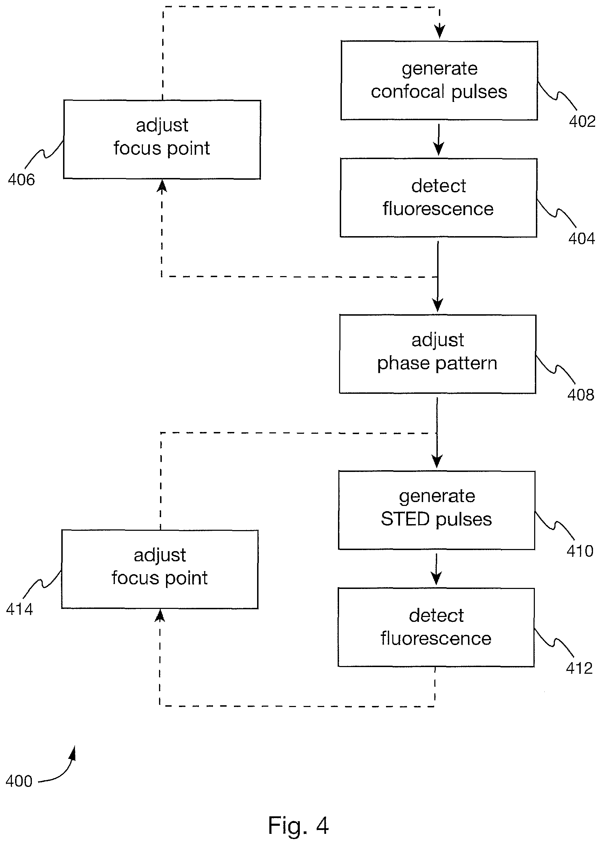

Fig. 4 shows a flowchart of a method 400 for two-color confocal colocalization microscopy of a sample in accordance with an embodiment of the invention. The method 400 may for example be implemented with the device 100 and is described in the following with reference to Fig. 1. This is, however, not intended to be limiting in any way and the method 400 may be implemented with any suitable device for two-color confocal colocalization microscopy.

To perform the colocalization microscopy, the sample 102 is labeled by two types of imaging markers, a confocal imaging marker and a STED imaging marker. Labeling the sample 102 may be part of the method 400 or the sample 102 may already have been labeled beforehand. The two types of imaging markers may in particular be used to label different constituents or parts of the sample 102, i.e. a first constituent may be labeled by attaching the confocal imaging marker and a second constituent may be labeled by attaching the STED imaging marker. The imaging markers may e.g. be fluorophores like fluorescent proteins or nitrogen-vacancy centers.

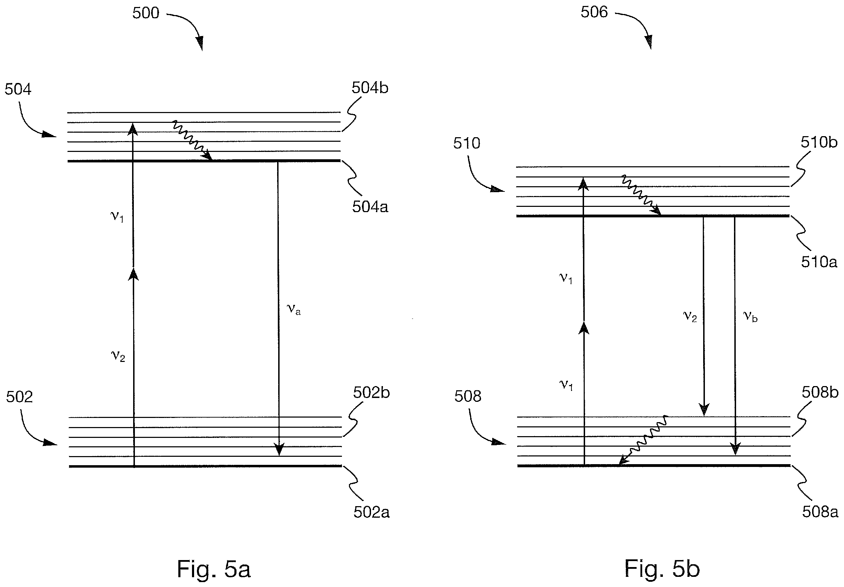

The confocal imaging marker and STED imaging marker have different energy spectra and correspondingly exhibit different optical properties, which may allow for distinguishing the different constituents. Examples for an energy level scheme or energy spectrum 500 of a confocal imaging marker and an energy level scheme or energy spectrum 506 of a STED imaging marker are illustrated in Fig. 5a and 5b, respectively. Each energy spectrum comprises an electronic ground state manifold 502 and 508, respectively, and an excited electronic state manifold 504 and 510, respectively. Each manifold may comprise a plurality of vibrational substates. The electronic ground state manifolds 502, 508 can for example comprise a vibrational ground state 502a and 508a, respectively, and a plurality of excited vibrational states 502b and 508b, respectively. Similarly, the excited electronic state manifolds 504, 510 can comprise a vibrational ground state 504a and 510a, respectively, and a plurality of excited vibrational states 504b and 510b, respectively.

In step 402, the first confocal excitation pulse 106a with the first wavelength λ₁ is generated from the first light source 104 and the second confocal excitation pulse 106b with the second wavelength λ₂ is generated from the second light source 112. Subsequently, the pulses 106a and 106b propagate along the respective optical path 110, 114 and are spatially overlapped on the main optical path 118 by the overlapping element 116. Finally, the pulses 106a and 106b are focused onto the focus point 122 by the objective 120. The point onto which the confocal pulses 106a and 106b are focused may also be referred to as the confocal focus point. Using the beam shaper 130, the confocal phase pattern and/or the confocal intensity pattern may be imprinted on the second confocal excitation pulse 106b such that the intensity distribution 300 of the second confocal excitation pulse 106b exhibits a local maximum at the confocal focus point, e.g. as described above with reference to Fig. 3a.

Step 402 may comprise setting the pulse duration and/or pulse energy of the first confocal excitation pulse 106a via the controller 134 and/or sending a trigger signal to the first light source 104 from the controller 134 to trigger the generation of the first confocal excitation laser pulse 106a. Step 402 may further comprise setting the pulse duration t_{conf} and/or pulse energy of the second confocal excitation pulse 106b and/or the time delay Δt_{conf} between the pulses 106a and 106b via the controller 134. As described above, the first light source 104 may send a trigger signal to the time delay unit 132 when emitting the first confocal excitation pulse 106a, from which the time delay unit 132 may generate a delayed trigger signal for the second light source 112 to emit the second confocal excitation pulse 106b such that the second confocal excitation pulse 106b arrives at the focus point 122 with the time delay Δt_{conf} relative to the first confocal excitation pulse 106a.

Preferably, the pulse durations of the pulses 106a and 106b are similar and the time delay Δt_{conf} is small compared to both pulse durations to maximize the temporal overlap between the pulses 106a and 106b. This may be advantageous to increase the excitation probability for confocal imaging markers in the vicinity of the focus point 122. In one example, the pulse durations of the pulses 106a and 106b may be equal or differ by less than a factor of two. In another example, the time delay Δt_{conf} is less than 25%, preferably less than 10% of the shorter one of the two pulse durations. The time delay Δt_{conf} may e.g. be less than 100 fs, the pulse duration of the pulse 106a 1 ps and t_{conf} = 10 ps.

The first and second wavelengths are chosen such that a two-photon excitation involving a photon having the first wavelength and a photon having the second wavelength is resonant with an excitation transition of the confocal imaging marker, i.e. the sum of the optical frequencies v₁ and v₂ corresponding to the first and second wavelength, respectively, is equal to the frequency corresponding to the energy difference between a state in the electronic ground state manifold 502 and a state in the excited electronic state manifold 504. In this case, a two-photon transition between the electronic ground state manifold 502 and the excited electronic state manifold 504 may be excited by simultaneous absorption of a photon from the first confocal excitation pulse 106a and a photon from the second confocal excitation pulse 106b. The sum of v₁ and v₂ may e.g. be resonant with a transition between the state 502a and one of the excited vibrational states 504b. A confocal imaging marker in an excited vibrational state may relax to the ground state of the respective electronic manifold e.g. through interactions with the environment in the sample 102 as indicated by the wiggling arrow in Fig. 5a. A confocal imaging marker in the vibrational ground state 504a may relax to the ground state manifold 502 by spontaneous emission, emitting a fluorescence photon at an emission wavelength λₐ of the confocal marker corresponding to an optical frequency vₐ.

In step 404, fluorescence emitted by the sample 102 in response to the pulses 106a and 106b is detected using the photodetector 126, onto which light originating from the sample 102 is imaged through the objective 120. This may comprise spectrally filtering the light originating from the sample 102 with the filtering element 128. The photodetector 126 may for example be a photodiode generating an electric voltage or current proportional to a light intensity on the photodiode, which may e.g. be read-out as a digital or analog imaging signal by the controller 134 or the imaging analysis unit. Preferably, the detection is synchronized with the emission of the pulses 106a and 106b, e.g. to reduce a background signal. For this, the photodetector 126 may e.g. receive a trigger signal from the controller 134 to initiate a measurement, which may be performed for a predefined duration, e.g. between 1 ns to 100 µs, or until a second trigger signal is received. Step 404 may further comprise determining the position of the confocal focus point on the sample 102, i.e. the position of the focus point 122 onto which the pulses 106a and 106b are focused in step 402, e.g. from the beam scanner 124 and/or the sample scanner, and associating this information with the imaging signal.

The method 400 may further comprise, in step 406, adjusting the focus point 122 using the beam scanner 124 and/or the sample scanner to a new position on the sample 102 and subsequently repeating steps 402 and 404 with the new focus point. In one example, starting from an initial position, the confocal focus point may be sequentially scanned across a region of interest on the sample 102, e.g. using a one-dimensional or two-dimensional rectangular grid. From the imaging signals and the position of the confocal focus point associated therewith, a confocal image may be acquired that characterizes the imaging signal as a function of the position of the confocal focus point on the sample 102, e.g. to determine a spatial distribution of the intensity of the fluorescence signal over the sample 102. From this, information on a spatial distribution of the confocal imaging markers in the sample 102 may be extracted.

In step 408, the phase pattern and/or intensity pattern imprinted by the beam shaper 130 is adjusted, switching from the confocal phase and/or intensity pattern to the STED phase and/or intensity pattern. The switching may e.g. be triggered by a trigger signal from the controller 134. Step 408 may comprise optimizing the STED phase and/or intensity pattern as described above with reference to Fig. 3b. Step 408 may further comprise setting the pulse duration t_{STED} and/or pulse energy of the STED depletion pulse 108b and/or the time delay Δt_{STED} between the STED excitation 108a and depletion pulses 108b via the controller 134, e.g. by adjusting the respective parameters of the second light source 112 and/or the time delay unit 132. In some examples, step 408 may also comprise setting the pulse duration and/or pulse energy of the STED excitation pulse 108a via the controller 134. Step 408 may further comprise adjusting the focus point 122, e.g. to the initial position. In other examples, the position of the focus point 122 on the sample 102 may be different for the STED pulses 108a and 108b than for the confocal excitations pulses 106a and 106b.

In step 410, the STED excitation pulse 108a with the first wavelength λ₁ is generated from the first light source 104 and the STED depletion pulse 108b with the second wavelength λ₂ is generated from the second light source 112. Subsequently, the pulses 108a and 108b propagate along the respective optical path 110, 114 and are spatially overlapped on the main optical path 118 by the overlapping element 116. Finally, the pulses 108a and 108b are focused onto the focus point 122 by the objective 120. The point onto which the STED pulses 108a and 108b are focused may also be referred to as the STED focus point. Using the beam shaper 130, the STED phase pattern and/or the STED intensity pattern may be imprinted on the STED depletion pulse 108b such that the intensity distribution 304 of the STED depletion pulse 108b exhibits a local minimum at the focus point 122, e.g. as described above with reference to Fig. 3b. Step 410 may comprise sending a trigger signal to the first light source 104 from the controller 134 to trigger the generation of the STED excitation pulse 108a. As described above, the first light source 104 may send a trigger signal to the time delay unit 132 when emitting the STED excitation pulse 108a, from which the time delay unit 132 may generate a delayed trigger signal for the second light source 112 to emit the STED depletion pulse 108b such that the STED depletion pulse 108b arrives at the focus point 122 with the time delay Δt_{STED} relative to the STED excitation pulse 108a.

The first wavelength is chosen such that an n-photon excitation at the first wavelength with *n* ≥ 1 is resonant with an excitation transition of the STED imaging marker, i.e. n-times the optical frequency v₁ corresponding to the first wavelength is equal to the frequency corresponding to the energy difference between a state in the ground state manifold 508 and a state in the excited electronic state manifold 510. In this case, a transition between the electronic ground state manifold 508 and the excited electronic state manifold 510 may be excited by simultaneous absorption of n photons from the STED excitation pulse 108a. In the example depicted in Fig. 5b, a two-photon excitation at the first wavelength is resonant with the excitation transition of the STED imaging marker, i.e. *n* = 2. The *n*-photon excitation may e.g. be resonant with a transition between the state 508a and one of the excited vibrational states 510b. A STED imaging marker in an excited vibrational state may relax to the ground state of the respective electronic manifold e.g. through interactions with the environment in the sample 102 as indicated by the wiggling arrows in Fig. 5b.

The second wavelength corresponding to the optical frequency v₂ is chosen to be resonant with a depletion transition of the STED imaging marker between the excited electronic state manifold 510 and the electronic ground state manifold 508, preferably a transition between the vibrational ground state 510a of the excited electronic state manifold 510 and an excited vibrational state 508b of the electronic ground state manifold 508. In this way, excited STED imaging markers, which can quickly relax to the state 510a as described above, may be transferred to the ground state manifold 508 by stimulated emission induced by the STED depletion pulse 108b. Subsequent relaxation to the ground state 508a may prevent re-excitation by the STED depletion pulse 108b. A STED imaging marker remaining in the vibrational ground state 510a after the STED depletion pulse 108b has passed, e.g. in the vicinity of the intensity minimum at the focus point 122, may relax to the ground state manifold 508 by spontaneous emission, emitting a fluorescence photon at an emission wavelength λ_{b} of the STED marker corresponding to an optical frequency v_{b}.

Preferably, the pulse duration t_{STED} and/or pulse energy of the STED depletion pulse 108b is larger than the pulse duration t_{conf} and pulse energy, respectively, of the second confocal excitation pulse 106b, e.g. to ensure an effective transfer of excited STED imaging markers while preventing bleaching of the STED imaging markers. In one example, t_{conf} may be between 1 ps and 100 ps and t_{STED} between 100 ps and 1 ns. The spatially averaged intensity of the STED depletion pulse 108b may be equal to the spatially averaged intensity of the second confocal excitation pulse 106b. In other examples, the spatially averaged intensity of the STED depletion pulse 108b may be smaller than the spatially averaged intensity of the second confocal excitation pulse 106b.

Preferably, the time delay Δt_{STED} is equal to or larger than the pulse duration of the STED excitation pulse 108a such that the STED depletion pulse 108b arrives at the focus point 122 when or after the STED excitation pulse 108a has passed the focus point 122. This may be advantageous to avoid two-photon excitation of confocal imaging markers by the pulses 108a and 108b. Preferably, the time delay Δt_{STED} is smaller than two times the pulse duration of the STED excitation pulse 108a, e.g. to suppress spontaneous emission by excited STED imaging markers. In one example, the pulse duration of the STED excitation pulse is between 100 fs and 10 ps and the time delay Δt_{STED} is between 100% and 150% of the pulse duration of the STED excitation pulse 108a.

In step 412, fluorescence emitted by the sample 102 in response to the pulses 108a and 108b is detected using the photodetector 126 and the corresponding imaging signal may be read-out by the controller 134 or the imaging analysis unit, e.g. as described above for step 404. Fluorescence photons may be emitted by excited STED imaging markers that have not been de-excited by the STED depletion pulse 108b, i.e. predominantly STED imaging markers in the vicinity of the intensity minimum of the STED depletion pulse 108b at the focus point 122. Preferably, the detection is synchronized with the emission of the STED depletion pulse 108b, e.g. to reduce a background signal. For this, the photodetector 126 may e.g. receive a trigger signal from the controller 134 to initiate a measurement, which may be performed for a predefined duration, e.g. between 1 ns and 100 µs, or until a second trigger signal is received. Step 412 may further comprise determining the position of the STED focus point on the sample 102, i.e. the position of the focus point 122 onto which the pulses 108a and 108b are focused in step 410, e.g. from the beam scanner 124 and/or the sample scanner, and associating this information with the imaging signal.

The method 400 may further comprise, in step 414, adjusting the focus point 122 using the beam scanner 124 and/or the sample scanner to a new position on the sample 102 and subsequently repeating steps 410 and 412 with the new focus point, e.g. as described above for step 406. Thereby, a STED image may be acquired that characterizes the imaging signal as a function of the position of the STED focus point on the sample 102, e.g. to determine a spatial distribution of the intensity of the fluorescence signal in the sample 102. From this, information on a spatial distribution of the STED imaging markers in the sample 102 may be extracted.

The method 400 may also comprise combining the confocal image characterizing the confocal imaging signal as a function of the position of the confocal focus point on the sample 102 and the STED image characterizing the STED imaging signal as a function of the position of the STED focus point on the sample 102 to form a colocalization image that comprises information on the confocal imaging signal and the STED imaging signal as a function of the position of the focus point 122 on the sample 102. Correspondingly, information on the spatial distributions of both the confocal imaging markers and the STED imaging markers in the sample 102 may be extracted from the colocalization image.

The flowchart illustrated in Fig. 4 only constitutes one example of a method for two-color confocal colocalization microscopy of a sample and the method 400 may be modified in various ways. In particular, the order of the steps in the flow chart shown in Fig. 4 is only exemplary and the method 400 is not limited to a certain order of execution. As far as technically feasible, the steps can be permuted and the method 400 may be performed in an arbitrary order of these steps. In particular, steps may be performed simultaneously at least in part, e.g. steps 402 and 404 or steps 410 and 412. In one example, the steps 402, 404, 408, 410, and 412 may be executed using the same position for the focus point 122 and the position of the focus point 122 on the sample 102 may only be adjusted afterwards, e.g. to subsequently repeat steps 402, 404, 408, 410, and 412 with the new focus point. In another example, steps 402 and 404 and/or steps 410 and 412 may be repeated without adjusting the position of the focus point 122 on the sample 102, e.g. to improve a signal-to-noise ratio. The method 400 may also comprise additional steps, for example the labeling of the sample 102 or the overlapping of the optical paths 110 and 114 onto the main optical path 118, e.g. to ensure that pulses propagating along the optical paths 110 and 114 are focused onto the same focus point 122.

The embodiments of the present invention disclosed herein only constitute specific examples for illustration purposes. The present invention can be implemented in various ways and with many modifications without altering the underlying basic properties. Therefore, the present invention is only defined by the claims as stated below.

### LIST OF REFERENCE SIGNS

- 100: -device for two-color confocal colocalization microscopy
- 102: - sample
- 104: - first light source
- 106a: - first confocal excitation pulse
- 106b: - second confocal excitation pulse
- 108a: - stimulated emission depletion (STED) excitation pulse
- 108b: - STED depletion pulse
- 110: - first optical path
- 112: - second light source
- 114: - second optical path
- 116: - overlapping element
- 118: - main optical path
- 120: - objective
- 122: - focus point
- 124: - beam scanner
- 126: - photodetector
- 128: - filtering element
- 130: - beam shaper
- 132: - time delay unit
- 134: - controller

- t_{conf}: - pulse duration of second confocal excitation pulse
- Δt_{conf}: - time delay between first and second confocal excitation pulses
- t_{STED}: - pulse duration of STED depletion pulse
- Δt_{STED}: - time delay between STED excitation and depletion pulses

- 300: - intensity distribution of the second confocal excitation pulse in a focal plane
- 300y: - cut through intensity distribution 300 along y axis
- 302: - confocal phase pattern
- 304: - intensity distribution of the STED pulse in a focal plane
- 304y: - cut through intensity distribution 304 along y axis
- 306: - STED phase pattern
- ϕ: - phase shift imprinted on pulse

- 400: - method for two-color confocal colocalization microscopy
- 402: - step of generating and focusing confocal pulses
- 404: - step of detecting fluorescence induced by confocal pulses
- 406: - step of adjusting confocal focus point
- 408: - step of adjusting phase pattern
- 410: - step of generating and focusing STED pulses
- 412: - step of detecting fluorescence induced by STED pulses
- 414: - step of adjusting STED focus point

- 500: - energy spectrum of confocal imaging marker
- 502: - electronic ground state manifold of confocal imaging marker
- 502a: - vibrational ground state of electronic ground state manifold 502
- 502b: - excited vibrational states of electronic ground state manifold 502
- 504: - excited electronic state manifold of confocal imaging marker
- 504a: - vibrational ground state of excited electronic state manifold 504
- 504b: - excited vibrational states of excited electronic state manifold 504
- 506: - energy spectrum of STED imaging marker
- 508: - electronic ground state manifold of STED imaging marker
- 508a: - vibrational ground state of electronic ground state manifold 508
- 508b: - excited vibrational states of electronic ground state manifold 508
- 510: - excited electronic state manifold of STED imaging marker
- 510a: - vibrational ground state of excited electronic state manifold 510
- 510b: - excited vibrational states of excited electronic state manifold 510
- v₁: - first optical frequency corresponding to first wavelength
- v₂: - second optical frequency corresponding to second wavelength
- vₐ: - optical emission frequency of confocal marker
- v_{b}: - optical emission frequency of STED marker

## Claims

1. A method for two-color confocal colocalization microscopy of a sample (102), the method comprising:
generating a first confocal excitation pulse (106a) with a first wavelength λ₁ and a second confocal excitation pulse (106b) with a second wavelength λ₂ different from the first wavelength;
focusing the first and second confocal excitation pulses (106a, 106b) onto a confocal focus point;
generating a stimulated emission depletion (STED) excitation pulse (108a) with the first wavelength and a STED depletion pulse (108b) with the second wavelength; and
focusing the STED excitation pulse (108a) and the STED depletion pulse (108b) onto a STED focus point,
wherein
an n-photon excitation at the first wavelength with *n* ≥ 1 is resonant with an excitation transition of a STED imaging marker;
the second wavelength is resonant with a depletion transition of the STED imaging marker; and
a two-photon excitation involving a photon having the first wavelength and a photon having the second wavelength is resonant with an excitation transition of a confocal imaging marker.

2. The method of claim 1, wherein
the first confocal excitation pulse (106a) and the STED excitation pulse (108a) propagate along a first optical path (110);
the second confocal excitation pulse (106b) and the STED depletion pulse (108b) propagate along a second optical path (114); and
the first and second optical paths (110, 114) are spatially overlapped by an optical element (116).

3. The method of claim 1 or 2, further comprising imprinting a phase pattern (306) and/or an intensity pattern onto the STED depletion pulse (108b), wherein the phase pattern (306) and/or intensity pattern is/are chosen such that an intensity distribution (304) of the STED depletion pulse (108b) in a STED focal plane exhibits a local minimum at the STED focus point, preferably further comprising adjusting the phase pattern (306) to a phase distribution of the STED depletion pulse (108b) and/or adjusting the intensity pattern to an intensity distribution of the STED depletion pulse (108b), in particular wherein an intensity of the STED depletion pulse (108b) at the STED focus point is less than 1%, preferably less than 0.1% of a global maximum of the intensity distribution (304) of the STED depletion pulse (108b) in the STED focal plane.

4. The method according to any one of the preceding claims, wherein an intensity distribution (300) of the second confocal excitation pulse (106b) in a confocal focal plane exhibits a local maximum at the confocal focus point.

5. The method according to any one of the preceding claims, wherein a pulse duration t_{STED} of the STED depletion pulse (108b) is larger than a pulse duration t_{conf} of the second confocal excitation pulse (106b) and/or wherein a time delay Δt_{conf} between the first and second confocal excitation pulses (106a, 106b) at the confocal focus point is less than 25%, preferably less than 10% of the pulse duration of the first (106a) and/or second confocal excitation pulse (106b) and/or wherein a time delay Δt_{STED} between the STED excitation pulse (108a) and the STED depletion pulse (108b) at the STED focus point is equal to or larger than a pulse duration of the STED excitation pulse (108a).

6. The method according to any one of the preceding claims, further comprising labeling a first constituent of the sample (102) with confocal imaging markers; and labeling a second constituent of the sample (102) with STED imaging markers.

7. The method according to any one of the preceding claims, wherein a two-photon excitation at the first wavelength is resonant with an excitation transition of the STED imaging marker and/or further comprising detecting light emitted from the sample (102) at an emission wavelength λ_{b} of the STED imaging marker and/or an emission wavelength λₐ of the confocal imaging marker.

8. The method according to any one of the preceding claims, further comprising
scanning the confocal focus point across the sample to acquire a confocal image characterizing a spatial distribution of confocal imaging markers;
scanning the STED focus point across the sample to acquire a STED image characterizing a spatial distribution of STED imaging markers; and
combining the confocal image and the STED image to form a colocalization image, wherein the colocalization image comprises information on the spatial distributions of confocal imaging markers and STED imaging markers.

9. A device (100) for two-color confocal colocalization microscopy of a sample (102), the device (100) comprising:
a first light source (104) configured to generate a first confocal excitation pulse (106a) and a stimulated emission depletion (STED) excitation pulse (108a) with a first wavelength λ₁;
a second light source (112) configured to generate a second confocal excitation pulse (106b) and a STED depletion pulse (108b) with a second wavelength λ₂ different from the first wavelength; and
a beam shaper (130) configured to selectively imprint a confocal phase pattern (302) and/or a confocal intensity pattern onto the second confocal excitation pulse (106b) and a STED phase pattern (306) and/or STED intensity pattern onto the STED depletion pulse (108b) such that an intensity distribution (300) of the second confocal excitation pulse (106b), when focused onto a focus point (122), exhibits a local maximum at the focus point (122) and an intensity distribution (304) of the STED depletion pulse (108b), when focused onto a focus point (122), exhibits a local minimum at the focus point (122).

10. The device (100) of claim 9, wherein the beam shaper (130) is an adaptive beam shaper configured to adjust the confocal phase pattern (302), the confocal intensity pattern, the STED phase pattern (306) and/or the STED intensity pattern, wherein an intensity of the STED depletion pulse (108b) at the focus point (122) is preferably less than 1%, preferably less than 0.1% of a global maximum of the intensity distribution (304) of the STED depletion pulse (108b) in the focal plane.

11. The device (100) of claim 9 or 10, wherein the first (104) and/or second light source (112) is configured to adjust the first and second wavelength, respectively and/or wherein the second light source (112) is configured to adjust a pulse duration t_{conf} of the second confocal excitation pulse (106b) and/or a pulse duration t_{STED} of the STED depletion pulse (108b).

12. The device (100) according to any one of claims 9-11, further comprising a time delay unit (132) configured to adjust a time delay Δt_{conf} between the first and second confocal excitation pulses (106a, 106b) and/or a time delay Δt_{STED} between the STED excitation and depletion pulses (108a, 108b) and/or further comprising an objective (120) to focus pulses emitted by the first (104) and/or second light source (112) and/or further comprising a beam scanner (124) configured to adjust a propagation direction of pulses emitted by the first (104) and/or second light source (112).

13. The device (100) according to any one of claims 9-12, further comprising a photodetector (126) to detect light emitted from the sample (102) at an emission wavelength.

14. The device (100) of claim 13, further comprising an imaging analysis unit, wherein the imaging analysis unit is configured to
obtain a confocal imaging signal from the photodetector (126), wherein the confocal imaging signal is associated with a confocal focus point;
obtain a STED imaging signal from the photodetector (126), wherein the STED imaging signal is associated with a STED focus point; and
combine the confocal imaging signal and the STED imaging signal to form a colocalization image, wherein the colocalization image comprises information on the confocal imaging signal, the confocal focus point, the STED imaging signal and the STED focus point.

15. The device (100) according to any one of claims 9-14, further comprising a controller (134) configured to set the time delay Δt_{conf}, the time delay Δt_{STED}, the pulse duration t_{conf}, the pulse duration t_{STED}, the confocal phase pattern (302), the confocal intensity pattern, the STED phase pattern (304) and/or the STED intensity pattern.
